# EUROPEAN PATENT APPLICATION

(11) **EP 1 770 843 A2**
(43) Date of publication of application: **04.04.2007**
(21) Application number: 06020190.2
(22) Date of filing: 26.09.2006
(51) Int. Cl.: H02J 3/18

(54) **Independent operation detecting apparatus and control method of the same**

(30) Priority: 30.09.2005 JP 2005287581
(71) Applicant: OMRON CORPORATION, Kyoto-shi, Kyoto 600-8530 (JP)
(72) Inventor: Tsubota, Yasuhiro Omron Corporation, Shimogyo-ku Kyoto-shi Kyoto 600-8530 (JP); Oka, Seiji Omron Corporation, Shimogyo-ku Kyoto-shi Kyoto 600-8530 (JP); Mabuchi, Masao Omron Corporation, Shimogyo-ku Kyoto-shi Kyoto 600-8530 (JP); Hosomi, Shinichi Omron Corporation, Shimogyo-ku Kyoto-shi Kyoto 600-8530 (JP); Kato, Masaya Omron Corporation, Shimogyo-ku Kyoto-shi Kyoto 600-8530 (JP)
(74) Representative: Kilian, Helmut

(57) **Abstract**

An independent operation detecting apparatus (6) comprising: a disturbance element injecting portion (12) for injecting a disturbance element in between a dispersed type power supply (2) and a system power supply (3); a system condition detecting portion (13) for detecting a change in system due to disturbance element at a system linkage point (X) between the dispersed type power supply and system power supply; and a control portion (16) for detecting independent operation of the dispersed type power supply (2) based on this detection result, further comprises a voltage detecting portion (14) for detecting a voltage between the dispersed type power supply (2) and a power conditioner (4), and when the control portion (16) detects an operating activity of the dispersed type power supply (2), it enables the disturbance element injecting portion (12) and system condition detecting portion (13) and if it determines that a voltage detected by the voltage detecting portion (14) is less than a predetermined voltage threshold, determines that the dispersed type power supply (2) is down and disables the disturbance element injecting portion (12) and system condition detecting portion (13).

## Description

### BACKGROUND OF THE INVENTION

### 1. Field of the Invention

The present invention relates to an independent operation detecting apparatus disposed between for example, a dispersed type power supply such as solar power generator, fuel battery power generator, gas engine power generator, wind power generator and hydraulic power generator and system power supply (commercial power supply) for detecting an independent operation of the dispersed type power supply, and a control method of the same independent operation detecting apparatus.

### 2. Description of the Related Art

Recently, there has been developed a system linkage system which links the dispersed type power supply such as solar power generator with the system power supply through a power conditioner with a possible reverse power flow and supplies electricity from the system power supply when the dispersed type power supply alone cannot supply sufficient electricity to any load.

This kind of system linkage system adopts an independent operation detecting apparatus which shuts down connection between the power condition connected to the dispersed type power supply and the system power supply if it detects the independent operation of the dispersed type power supply, because there is a necessity of preventing the independent operation of the dispersed type power supply (see for example, Japanese Patent Application Laid-Open No.H10-248168, Abstract and FIG. 1)).

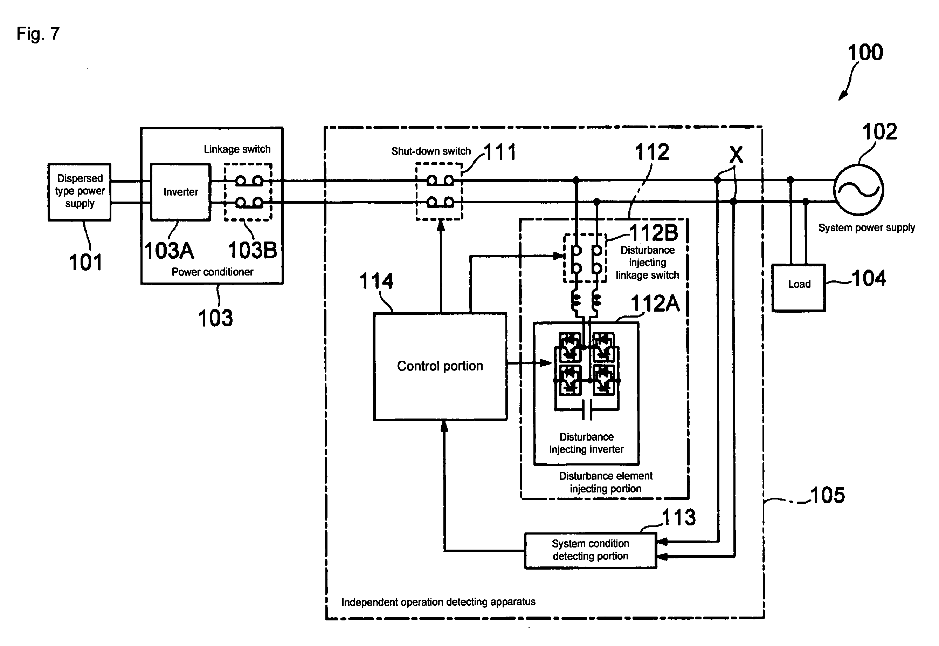

FIG. 7 is a block diagram showing the schematic structure of the interior of a system linkage system which adopts a conventional independent operation detecting apparatus.

A system linkage system 100 shown in FIG. 7 comprises a dispersed type power supply 101, a system power supply 102, a power conditioner 103 including an inverter 103A for converting DC power generated in the dispersed type power supply 101 to AC power, a load 104 such as household electric appliance which consumes AC power converted by the power conditioner 103 or AC power from the system power supply 102, and an independent operation detecting apparatus 105 which is disposed between the power conditioner 103 connected to the dispersed type power supply 101 and the system power supply 102 in order to detect an independent operation of the dispersed type power supply 101.

The power conditioner 103 includes a linkage switch 103B which shuts down connection between the dispersed type power supply 101 and the system power supply 102 as well as the inverter 103A.

The independent operation detecting apparatus 105 includes a shut-down switch 111 which shuts down connection between the power conditioner 103 and the system power supply 102, a disturbance element injecting portion 112 which generates disturbance element to be injected in between the power conditioner 103 and the system power supply 102, a system condition detecting portion 113 which detects a change in system due to disturbance element at a system linkage point X between the power conditioner 103 and the system power supply 102, for example, change in voltage of the system or change in frequency and a control portion 114 for controlling the independent operation detecting apparatus 105 entirely.

The disturbance element injecting portion 112 comprises a disturbance injecting inverter 112A which generates disturbance element to be injected in between the power conditioner 103 and the system power supply 102 and a disturbance injecting linkage switch 112B which establishes or shuts down connection between the disturbance injecting inverter 112A and the system power supply 102. The disturbance injecting linkage switch 112B supplies electricity from the system power supply 102 to the disturbance injecting inverter 112A by connecting between the disturbance injecting inverter 112A and the system power supply 102 to generate the disturbance element in the disturbance injecting inverter 112A, injects this generated disturbance element in between the power conditioner 103 and the system power supply 102 and stops supply of electricity from the system power supply 102 to the disturbance injecting inverter 112A by shutting down connection between the disturbance injecting inverter 112A and the system power supply 102 in order to shut down injection of disturbance element from the disturbance injecting inverter 112A to the power conditioner 103 and the system power supply 102.

When the control portion 114 injects disturbance element by controlling the disturbance injecting inverter 112A within the disturbance element injecting portion 112 and the disturbance injecting linkage switch 112B, it enables the disturbance injecting inverter 112A and the disturbance injecting linkage switch 112B and generates disturbance element in the disturbance injecting inverter 112A by supplying electricity from the system power supply 102 to the disturbance injecting inverter 112A through the disturbance injecting linkage switch 112B. Then, the control portion 114 injects this disturbance element in between the power conditioner 103 and the system power supply 102, detects a change in the system due to disturbance element at the system linkage point X through the system condition detection portion 113 and then judges the independent operation of the dispersed type power supply 101 based on this detection result.

Further, when the control portion 114 detects an independent operation of the dispersed type power supply 101, it shuts down connection between the power conditioner 103 and the system power supply 102 by controlling the shut-down switch 111.

In the meantime, the disturbance element corresponds to active disturbance signal such as reactive power change, active power change, frequency shift, harmonic injection.

In the independent operation detecting apparatus 105 adopted for the system linkage system 100 shown in FIG. 7, disturbance element generated in the disturbance element injecting portion 112 is injected in between the power conditioner 103 and the system power supply 102 and change in system due to disturbance element is detected at the system linkage point X between the power conditioner 103 and the system power supply 102 through the system condition detecting portion 113. Based on this detection result, the independent operation of the dispersed type power supply 101 is judged and if the independent operation of the dispersed type power supply 101 is detected, the shut-down switch 111 is controlled to shut down connection between the power conditioner 103 and the system power supply 102. As a consequence, any fault due to the independent operation of the dispersed type power supply 101 can be prevented securely.

In the conventional independent operation detecting apparatus 105, electric power is always supplied to the disturbance element injecting portion 112 from the system power supply 102 in order to detect the independent operation of the dispersed type power supply 101 regardless of whether or not the dispersed type power supply 101 is active so as to generate disturbance element by the disturbance element injecting portion 112, and this generated disturbance element is injected in between the power conditioner 103 and the system power supply 102. A system change due to the disturbance element is detected at the system linkage point X through the system condition detecting portion 113 and based on the detection result, the independent operation of the dispersed type power supply 101 is judged. However, the independent operation of the dispersed type power supply 101 occurs only when the dispersed type power supply 101 is activated, and the dispersed type power supply 101 like solar power generator which depends largely on the sunshine hours can be inactive at night. In other words, there are cases in which the dispersed type power supply 101 is not activated. If the independent operation detection function of detecting the independent operation of the dispersed type power supply 101 is always activated despite that there is such a case in which the dispersed type power supply 101 is not activated, needles to say, a large amount of electricity is needed and system efficiency may be dropped.

### SUMMARY OF THE INVENTION

Accordingly, the present invention has been achieved in views of the above-described problems and an object of the invention is to provide an independent operation detecting apparatus capable of improving system efficiency while improving consumption of electric power largely and a control method of the independent operation detecting apparatus.

To achieve the above-described object, the independent operation detecting apparatus of the present invention comprises: a disturbance element injecting means for injecting a disturbance element in between a dispersed type power supply and a system power supply; a system condition detecting means for detecting a change in system due to disturbance element at a system linkage point between the dispersed type power supply and system power supply; and a control means for detecting independent operation of the dispersed type power supply based on the detection result of the system condition detecting means, characterized by further comprising: an operating condition detecting means for detecting an operating condition of the dispersed type power supply, and characterized in that the control means enables the disturbance element injecting means and system condition detecting means when an operating condition of the dispersed type power supply is detected by the operating condition detecting means and disables the disturbance element injecting means and system condition detecting means when an operation stop of the dispersed type power supply is detected by the operating condition detecting means.

In the independent operation detecting apparatus of the present invention, the control means stops supply of electricity from the system power supply to the disturbance element injecting means and the system condition detecting means when the operation stop of the dispersed type power supply is detected by the operating condition detecting means.

In the independent operation detecting apparatus, the control means controls the disturbance element injecting means so as to stop injecting the disturbance element to the disturbance element injecting means when the operation stop of the dispersed type power supply is detected by the operating condition detecting means.

In the independent operation detecting apparatus, the control means is able to set a normal mode for activating both independent operation detecting function activating the disturbance element injecting means and the system condition detecting means to detect an independent operation of the dispersed type power supply and operating condition detecting function detecting an operating condition of the dispersed type power supply by the operating condition detecting means or a sleep mode for activating only the operating condition detecting function, and selectively sets the sleep mode if the operation stop of the dispersed type power supply is detected by the operating condition detecting means.

In the independent operation detecting apparatus, the operating condition detecting means has an output current detecting means for detecting output current of a power conditioner which converts DC power from the dispersed type power supply to AC power, judges whether or not the output current detected by the output current detecting means is less than a predetermined current threshold, and detects the operation stop of the dispersed type power supply if it is determined that the output current is less than the predetermined current threshold .

In the independent operation detecting apparatus, the operating condition detecting means has a voltage detecting means for detecting voltage between a power conditioner which converts DC power from the dispersed type power supply to AC power and the dispersed type power supply, judges whether or not the voltage detected by the voltage detecting means is less than a predetermined voltage threshold, and detects the operation stop of the dispersed type power supply if it is determined that the voltage is less than the predetermined voltage threshold.

In the independent operation detecting apparatus, the operating condition detecting means judges whether or not an operating condition signal from the dispersed type power supply is an operation stop signal and detects the operation stop of the dispersed type power supply if it is determined that the operating condition signal is the operation stop signal.

In the independent operation detecting apparatus, the operating condition detecting means sets an operation stop time zone of the dispersed type power supply, judges whether or not present time reaches the operation stop time zone, and detects the operation stop of the dispersed type power supply if it is determined that the present time reaches the operation stop time zone.

In the independent operation detecting apparatus, the operating condition detecting means comprises: an output current detecting means for detecting output current of a power conditioner which converts DC power from the dispersed type power supply to AC power; and a voltage detecting means for detecting voltage between the dispersed type power supply and the power conditioner, and detects the operation stop of the dispersed type power supply if it is determined that the output current detected by the output current detecting means is less than a predetermined current threshold and that the voltage detected by the voltage detecting means is less than a predetermined voltage threshold.

In the independent operation detecting apparatus, the operating condition detecting means has an output current detecting means for detecting output current of a power conditioner which converts DC power from the dispersed type power supply to AC power, and detects the operation stop of the dispersed type power supply if it is determined that the output current detected by the output current detecting means is less than a predetermined current threshold and that an operating condition signal from the dispersed type power supply is an operation stop signal.

In the independent operation detecting apparatus, the operating condition detecting means has an output current detecting means for detecting output current of a power conditioner which converts DC power from the dispersed type power supply to AC power, sets an operation stop time zone of the dispersed type power supply and detects the operation stop of the dispersed type power supply if it is determined that the output current detected by the output current detecting means is less than a predetermined current threshold and that the present time reaches the operation stop time zone of the dispersed type power supply.

In the independent operation detecting apparatus, the operating condition detecting means has a voltage detecting means for detecting voltage between a power conditioner which converts DC power from the dispersed type power supply to AC power and the dispersed type power supply and detects the operation stop of the dispersed type power supply if it is determined that the voltage detected by the voltage detecting means is less than a predetermined voltage threshold and that an operating condition signal from the dispersed type power supply is an operation stop signal.

In the independent operation detecting apparatus, the operating condition detecting means has a voltage detecting means for detecting voltage between a power conditioner which converts DC power from the dispersed type power supply to AC power and the dispersed type power supply, sets an operation stop time zone of the dispersed type power supply and detects the operation stop of the dispersed type power supply if it is determined that the voltage detected by the voltage detecting means is less than a predetermined voltage threshold and that the present time reaches the operation stop time zone of the dispersed type power supply.

In the independent operation detecting apparatus, the operating condition detecting means sets an operation stop time zone of the dispersed type power supply and detects the operation stop of the dispersed type power supply if an operating condition signal from the dispersed type power supply is an operation stop signal and the present time reaches the operation stop time zone of the dispersed type power supply.

The independent operation detecting apparatus comprises: a disturbance element injecting means for injecting a disturbance element in between a dispersed type power supply and a system power supply; a system condition detecting means for detecting a change in system due to disturbance element at a system linkage point between the dispersed type power supply and system power supply; and a control means for detecting independent operation of the dispersed type power supply based on the detection result of the system condition detecting means, characterized by further comprising: a power conditioner operating condition detecting means which is disposed between the dispersed type power supply and the independent operation detecting apparatus in order to detect an operating condition of a power conditioner which converts DC power of the dispersed type power supply to AC power, and characterized in that the control means enables the disturbance element injecting means and the system condition detecting means when an operating condition of the power conditioner is detected by the power conditioner operating condition detecting means and disables the disturbance element injecting means and the system condition detecting means when an operation stop of the power conditioner is detected by the power conditioner operating condition detecting means.

The control method of an independent operation detecting apparatus of the present invention is a control method of an independent operation detecting apparatus comprising: a disturbance element injecting means for injecting a disturbance element in between a dispersed type power supply and a system power supply; a system condition detecting means for detecting a change in system due to disturbance element at a system linkage point between the dispersed type power supply and system power supply; a control means for detecting independent operation of the dispersed type power supply based on the detection result of the system condition detecting means, and an operating condition detecting means for detecting an operating condition of the dispersed type power supply, characterized in that detecting an operating condition of the dispersed type power supply by the operating condition detecting means; enabling the disturbance element injecting means and the system condition detecting means by the control means; detecting an operation stop of the dispersed type power supply by the operating condition detecting means; and disabling the disturbance element injecting means and the system condition detecting means by the control means.

According to the independent operation detecting apparatus of the present invention having the above-described structure, the control means enables the disturbance element injecting means and system condition detecting means when an operating condition of the dispersed type power supply is detected by the operating condition detecting means and disables the disturbance element injecting means and system condition detecting means when an operation stop of the dispersed type power supply is detected by the operating condition detecting means. As a consequence, if the dispersed type power supply is not activated, the system efficiency can be improved largely by stopping the independent operation detecting function such as the disturbance element injecting activity of the disturbance element injecting means and the system condition detecting activity of the system condition detecting means.

According to the independent operation detecting apparatus of the present invention, the control means enables the disturbance element injecting means and the system condition detecting means when an operating condition of the power conditioner is detected by the power conditioner operating condition detecting means and disables the disturbance element injecting means and the system condition detecting means when an operation stop of the power conditioner is detected by the power conditioner operating condition detecting means. If the power conditioner connected to the dispersed type power supply is not activated, the system efficiency can be improved largely by stopping the independent operation detection functions such as the disturbance element injecting activity of the disturbance element injecting means and the system condition detecting activity of the system condition injecting means.

According to the control method of the independent operation detecting apparatus of the present invention, the method includes detecting an operating condition of the dispersed type power supply by the operating condition detecting means; enabling the disturbance element injecting means and the system condition detecting means by the control means; detecting an operation stop of the dispersed type power supply by the operating condition detecting means; and disabling the disturbance element injecting means and the system condition detecting means by the control means. As a consequence, if the dispersed type power supply is not activated, the system efficiency can be improved largely by stopping the independent operation detecting function such as the disturbance element injecting activity of the disturbance element injecting means and the system condition detecting activity of the system condition detecting means.

### BRIEF DESCRIPTION OF THE DRAWINGS

FIG. 1 is a block diagram showing the schematic structure of the interior of a system linkage system which adopts an independent operation detecting apparatus according to a first embodiment of the present invention;
FIG. 2 is a circuit diagram showing the schematic structure of the interior of the voltage detecting portion of the independent operation detecting apparatus of the first embodiment;
FIG. 3 is a block diagram showing the schematic structure of the interior of the system linkage system which adopts an independent operation detecting apparatus according to a second embodiment of the present invention;
FIG. 4 is a block diagram showing the schematic structure of the interior of the system linkage system which adopts an independent operation detecting apparatus according to a third embodiment of the present invention;
FIG. 5 is a block diagram showing the schematic structure of the interior of the system linkage system which adopts an independent operation detecting apparatus according to a fourth embodiment of the present invention;
FIG. 6 is a block diagram showing the schematic structure of the interior of the system linkage system which adopts an independent operation detecting apparatus according to a fifth embodiment of the present invention; and
FIG. 7 is a block diagram showing the schematic structure of the interior of the system linkage system which adopts a conventional independent operation detecting apparatus.

### DESCRIPTION OF THE PREFERRED EMBODIMENTS

Hereinafter, a system linkage system which adopts an independent operation detecting apparatus according to a preferred embodiment of the present invention will be described with reference to the accompanying drawings.

### (First embodiment)

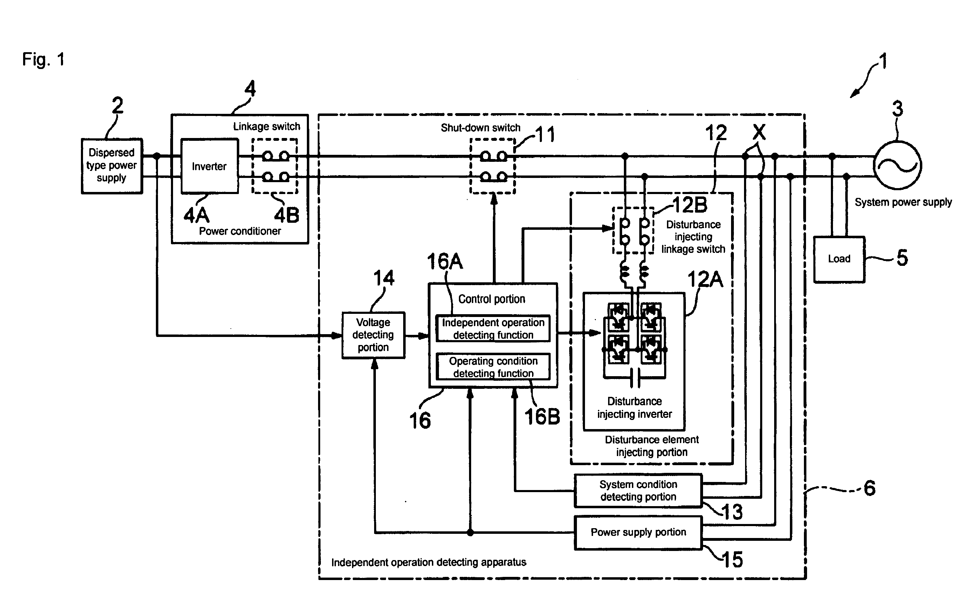

FIG. 1 is a block diagram showing the schematic structure of the interior of a system linkage system which adopts an independent operation detecting apparatus according to a first embodiment of the present invention.

A system linkage system 1 shown in FIG. 1 comprises a dispersed type power supply 2 such as a solar power generator, a fuel battery power generator, a gas engine power generator, a wind power generator and a hydraulic power generator, a system power supply 3, a power conditioner 4 including an inverter 4A which converts DC power generated by the dispersed type power supply 2 to AC power, a load 5 like household electric appliance which consumes AC power converted by the power conditioner 4 or AC power from the system power supply 3 and an independent operation detecting apparatus 6 which is disposed between the power conditioner 4 connected to the dispersed type power supply 2 and the system power supply 3 in order to detect independent operation of the dispersed type power supply 2.

The power conditioner 4 is provided with a linkage switch 4B that either connects or disconnects the dispersed type power supply 2 and the system power supply 3, in addition to the inverter 4A.

The independent operation detecting apparatus 6 comprises a shut-down switch 11 which shuts down connection between the power conditioner 4 and the system power supply 3, a disturbance element injecting portion 12 for generating disturbance element to be injected in between the power conditioner 4 and the system power supply 3, a system condition detecting portion 13 for detecting a change in system due to disturbance element at a system linkage point X, for example, voltage change of the system or frequency change, a voltage detecting portion 14 for detecting a voltage between the dispersed type power supply 2 and the power conditioner 4, a power supply portion 15 which supplies the independent operation detecting apparatus 6 entirely with control power through the system power supply 3 and a control portion 16 for controlling this independent operation detecting apparatus 6 entirely.

The disturbance element injecting portion 12 comprises a disturbance injecting inverter 12A which generates disturbance element to be injected in between the power conditioner 4 and the system power supply 3 and a disturbance injecting linkage switch 12B which establishes or shuts down connection between the disturbance injecting inverter 12A and the system power supply 3. The disturbance injecting linkage switch 12B supplies electricity from the system power supply 3 to the disturbance injecting inverter 12A by connecting between the disturbance injecting inverter 12A and the system power supply 3 so as to generate a disturbance element with the disturbance injecting inverter 12A, injects this generated disturbance element in between the power conditioner 4 and the system power supply 3 and stops supply of electricity from the system power supply 3 to the disturbance injecting inverter 12A by shutting down connection between the disturbance injecting inverter 12A and the system power supply 3 in order to shut down injection of disturbance element from the disturbance injecting inverter 12A to the power conditioner 4 and the system power supply 3.

The system condition detecting portion 13 detects a system change due to disturbance element injected in between the power conditioner 4 and the system power supply 3 at a system linkage point X and notifies the control portion 16 of this detection result.

The voltage detecting portion 14 detects a voltage between the dispersed type power supply 2 and the power conditioner 4 and notifies the control portion 16 of this detection result.

A power supply portion 15 supplies control power through the system power supply 3 and this control power is supplied to the voltage detecting portion 14 and the control portion 16.

The control portion 16 has independent operation detecting function 16A of judging the independent operation of the dispersed type power supply 2 by enabling the disturbance element injecting portion 12 and the system condition detecting portion 13 and operating condition detecting function 16B of monitoring the operating condition of the dispersed type power supply 2 through the voltage detecting portion 14, and can set a normal mode which activates both the independent operation detecting function 16A and the operating condition detecting function 16B and a sleep mode of activating only the operating condition detecting function 16B by stopping the activity of the independent operation detecting function 16A.

The independent operation detecting function 16A enables the disturbance element injecting portion 12 and the system condition detecting portion 13, supplies electricity to the disturbance injecting inverter 12A from the system power supply 3 through the disturbance injecting linkage switch 12B so as to generate a disturbance element with the disturbance injecting inverter 12A, and injects the generated disturbance element between the power conditioner 4 and the system power supply 3 through the disturbance injecting linkage switch 12B. At the same time, the independent operation detecting function 16A acquires a detection result of the system change due to the disturbance element at the system linkage point X through the system condition detecting portion 13 and then, judges whether or not the dispersed type power supply 2 is on its independent operation based on this detection result.

The operating condition detecting function 16B monitors a voltage between the dispersed type power supply 2 and the power conditioner 4 through the voltage detecting portion 14, judges whether or not the voltage is less than a predetermined voltage threshold and then judges whether or not the dispersed type power supply stops its operation based on this detection result. In the meantime, the predetermined voltage threshold corresponds to a voltage value relating to the operation stop condition of the dispersed type power supply 2 and if the voltage detected by the voltage detecting portion 14 is determined to be less than the predetermined voltage threshold, it is determined that the operation of the dispersed type power supply 2 is stopped.

The control portion 16 monitors a voltage between the dispersed type power supply 2 and the power conditioner 4 through the voltage detecting portion 14 during the normal mode and if the same voltage is determined to be less than the predetermined voltage threshold, it is determined that the operation of the dispersed type power supply 2 is stopped. Then, the control portion 16 stops the independent operation detecting function 16A being activated and then moves to the sleep mode which activates only the operating condition detecting function 16B.

Because the control portion 16 being in the sleep mode stops the activity of the independent operation detecting function 16A, it shuts down connection between the disturbance injecting inverter 12A and the system power supply 3 through the disturbance injecting linkage switch 12B in the disturbance element injecting portion 12 and disables the disturbance element injecting portion 12 and the system condition detecting portion 13.

When the independent operation detection function 16A determines the independent operation of the dispersed type power supply 2, the control portion 16 controls the shut-down switch 11 to shut down connection between the power conditioner 4 and the system power supply 3.

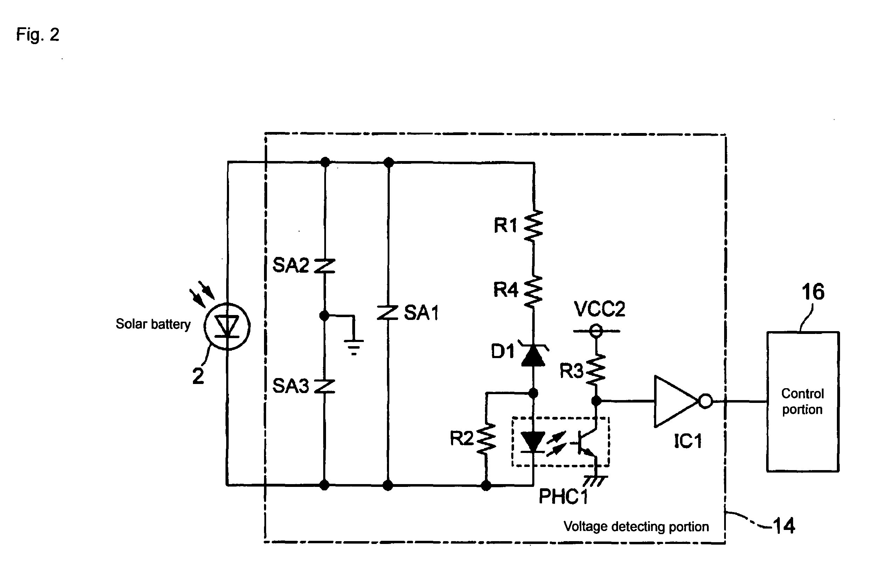

FIG. 2 is an explanatory diagram showing the schematic structure of the interior of the voltage detecting portion 14 of the independent operation detecting apparatus 6.

The voltage detecting portion 14 shown in FIG. 2 comprises surge absorbers SA1-SA3, resistors R1-R4, a Zener diode D1, a photo coupler PHC1 and a NOT circuit IC1 if the dispersed type power supply 2 is a solar battery, and when predetermined current flows into the photo coupler PHC through the Zener diode D1 when the dispersed type power supply 2 is operating, LOW level is inputted to the NOT circuit IC1 and the LOW level is inverted and outputted by the NOT circuit IC1. As a consequence, the control portion 16 recognizes that the dispersed type power supply 2 is operating by obtaining HIGH level from the NOT circuit IC1.

When the dispersed type power supply 2 is stopped, the voltage detecting portion 14 inputs HIGH level into the NOT circuit IC1 to prevent a predetermined current from flowing into the photo coupler PHC through the Zener diode D1 and the HIGH level is inverted and outputted by the NOT circuit IC1. As a consequence, the control portion 16 recognizes that the dispersed type power supply 2 is stopped by obtaining LOW level from the NOT circuit IC1.

The disturbance element injecting means mentioned in the scope of claim corresponds to the disturbance element injection portion 12, the system condition detecting means corresponds to the system condition detecting portion 13, the control portion corresponds to the control portion 16, the operating condition detecting means and voltage detecting means correspond to the voltage detecting portion 14 and the power supply means corresponds to the power supply portion 15.

Next, the operation of the independent operation detecting apparatus 6 of the first embodiment will be described.

When the dispersed type power supply 2 is operating, the control portion 16 of the independent operation detecting apparatus 6 sets both the independent operation detecting function 16A and the operating condition detecting function 16B to the normal mode and enables the disturbance element injecting portion 12 and the system condition detecting portion 13.

Depending on the ON control of the control portion 16, the disturbance element injecting portion 12 controls the disturbance injecting linkage switch 12B so as to supply electricity from the system power supply 3 to the disturbance injecting inverter 12A, generates a disturbance element by driving the disturbance injecting inverter 12A and injects the disturbance element in between the power conditioner 4 and the system power supply 3 through the disturbance injecting linkage switch 12B.

The system condition detecting portion 13 detects a change in system due to disturbance element at the system linkage point X between the power conditioner 4 and the system power supply 3 and notifies the control portion 16 of this detection result. When the independent operation detecting function 16A of the control portion 16 acquires a detection result of the change in system, judges whether the dispersed type power supply 2 is on independent operation based on the same detection result and if it is determined that the dispersed type power supply 2 is on the independent operation, controls the shut-down switch 11 in order to shut down connection between the power conditioner 4 and the system power supply 3.

The operating condition detecting function 16B of the control portion 16 detects a voltage between the power conditioner 4 and the dispersed type power supply 2 through the voltage detecting portion 14 even during normal mode so as to judge whether or not the same voltage is less than a predetermined voltage threshold.

If the control portion 16 determines that the voltage between the power conditioner 4 and the dispersed type power supply 2, detected by the voltage detecting portion 14, is less than the predetermined voltage threshold, it determines that the dispersed type power supply 2 is stopped and disables the disturbance element injecting portion 12 and the system condition detecting portion 13 through the independent operation detecting function 16A and moves to the sleep mode to stop the independent operation detecting function 16A also.

When it is determined that the dispersed type power supply 2 is stopped, the control portion 16 controls the disturbance injecting linkage switch 12B to shut down connection between the system power supply 3 and the disturbance injecting inverter 12A in order to stop supply of electricity to the disturbance injecting inverter 12A in the disturbance element injecting portion 12 through the independent operation detecting function 16A.

As a result, if it is determined that the dispersed type power supply 2 is stopped, the control portion 16 moves to the sleep mode to stop the independent operation detecting function 16A while only the operating condition detecting function 16B is activate, thereby monitoring the operating condition of the dispersed type power supply 2 through the voltage detecting portion 14. If it is determined that the voltage between the dispersed type power supply 2 and the power conditioner 4 is over the predetermined voltage threshold, the control portion 16 determines that the operation of the dispersed type power supply 2 is restarted so as to start up the independent operation detecting function 16A to restart the ON drives of the disturbance element injecting portion 12 and the system condition detecting portion 13.

According to the first embodiment, a voltage between the dispersed type power supply 2 and the power conditioner 4 is detected through the voltage detecting portion 14 and if it is determined that the same voltage is less than a predetermined voltage threshold, it is determined that the operation of the dispersed type power supply 2 is stopped and the disturbance element injecting portion 12 and the system condition detecting portion 13 are disabled. As a consequence, waste consumption of electricity to the disturbance element injecting portion 12 and the system condition detecting portion 13 and the like originated from the independent operation detection when the operation of the dispersed type power supply 2 is stopped can be largely reduced, thereby improving system efficiency in the independent operation detecting apparatus 6 largely.

Because according to the first embodiment, the sleep mode of stopping the independent operation detecting function 16A in the control portion 16 while activating only the operating condition detecting function 16B is set if it is determined that the dispersed type power supply 2 is stopped, waste power consumption in the control portion 16 when the dispersed type power supply 2 is stopped can be reduced largely, thereby reducing a load on the control portion 16 largely.

According to the first embodiment, the voltage detecting portion 14 detects a voltage between the dispersed type power supply 2 and the power conditioner 4 so as to judge whether or not the same voltage is less than a predetermined voltage threshold and whether or not the dispersed type power supply 2 is stopped is determined based on this judgment result. As a method for determining whether or not the dispersed type power supply 2 is stopped, a variety of embodiments can be considered. Thus, respective embodiments for determining whether or not the dispersed type power supply 2 is stopped will be described.

### (Second embodiment)

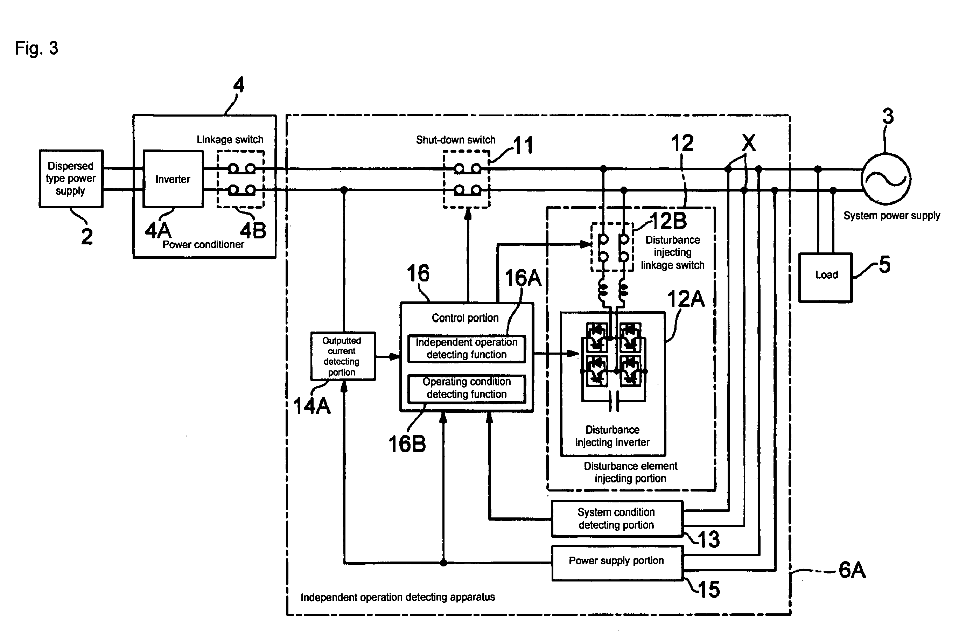

FIG. 3 is a block diagram showing the schematic structure of the interior of the system linkage system which adopts an independent operation detecting apparatus according to the second embodiment. Like reference numerals are attached to the same structure as the system linkage system 1 shown in FIG. 1 and duplicated description of the structure and operation is not repeated.

An independent operation detecting apparatus 6A shown in FIG. 3 is different from the independent operation detecting apparatus 6 shown in FIG. 1 in that an output current detecting portion 14A for detecting output current from the power conditioner 4 is provided instead of the voltage detecting portion 14, the operating condition detecting function 16B of the control portion 16 detects an output current of the power conditioner 4 through the output current detecting portion 14A so as to judge whether or not this output current is less than a predetermined threshold and if it is determined that the output current is less than the predetermined current threshold, it is determined that the dispersed type power supply 2 is stopped. In the meantime, the predetermined current threshold corresponds to output current value of the power conditioner 4 relating to the operation stop condition of the dispersed type power supply 2.

The operating condition detecting means and output current detecting means described in the scope of claim corresponds to the output current detecting portion 14A.

According to the second embodiment, output current of the power conditioner 4 is detected through the output current detecting portion 14A and if it is determined that the output current is less than the predetermined current threshold, it is determined that the operation of the dispersed type power supply 2 is stopped and the disturbance element injecting portion 12 and the system condition detecting portion 13 are disabled. As a consequence, waste power consumption in the disturbance element injecting portion 12 and the system condition detecting portion 13 and the like relating to the independent operation detection when the operation of the independent type power supply 2 is stopped can be reduced largely, thereby improving the system efficiency in the independent operation detecting apparatus 6A largely.

### (Third embodiment)

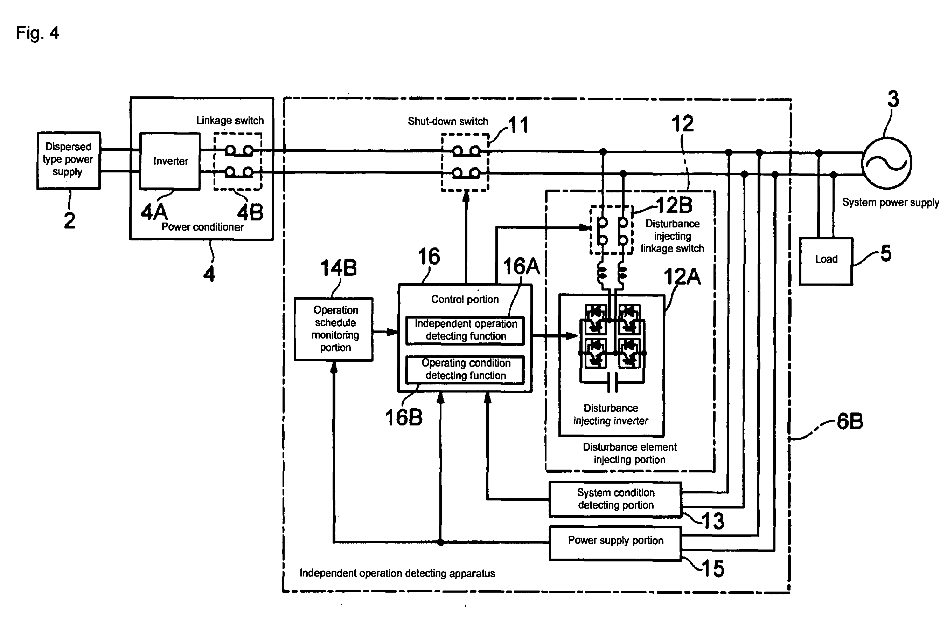

FIG. 4 is a block diagram showing the schematic structure of the interior of the system linkage system 1 which adopts an independent operation detecting apparatus according to a third embodiment. Like reference numerals are attached to the same structure as the system linkage system 1 shown in FIG. 1 and duplicated description of the structure and operation is not repeated.

The independent operation detecting apparatus 6B shown in FIG. 4 is different from the independent operation detecting apparatus 6 shown in FIG. 1 in that an operation schedule monitoring portion 14B for monitoring the operation schedule of the dispersed type power supply 2 is provided instead of the voltage detecting portion 14, whether or not a present time is in an operation stop time zone of the dispersed type power supply 2 is judged by referring to the operation schedule of the dispersed type power supply 2 and if it is determined that the present time exists in the operation stop time zone, it is determined that the operation of the dispersed type power supply 2 is stopped.

The operating condition detecting means mentioned in the scope of claim corresponds to the operation schedule monitoring portion 14B.

According to the third embodiment, if it is determined that the present time is in the operation stop time zone by the operation schedule monitoring portion 14B, it is determined that the operation of the dispersed type power supply 2 is stopped and the disturbance element injection portion 12 and the system condition detecting portion 13 are disabled. As a consequence, waste power consumption in the disturbance element injecting portion 12 and the system condition detecting portion 13 relating to the independent operation detection when the operation of the dispersed type power supply 2 is stopped can be reduced largely, thereby improving the system efficiency in the independent operation detecting apparatus 6B largely.

### (Fourth embodiment)

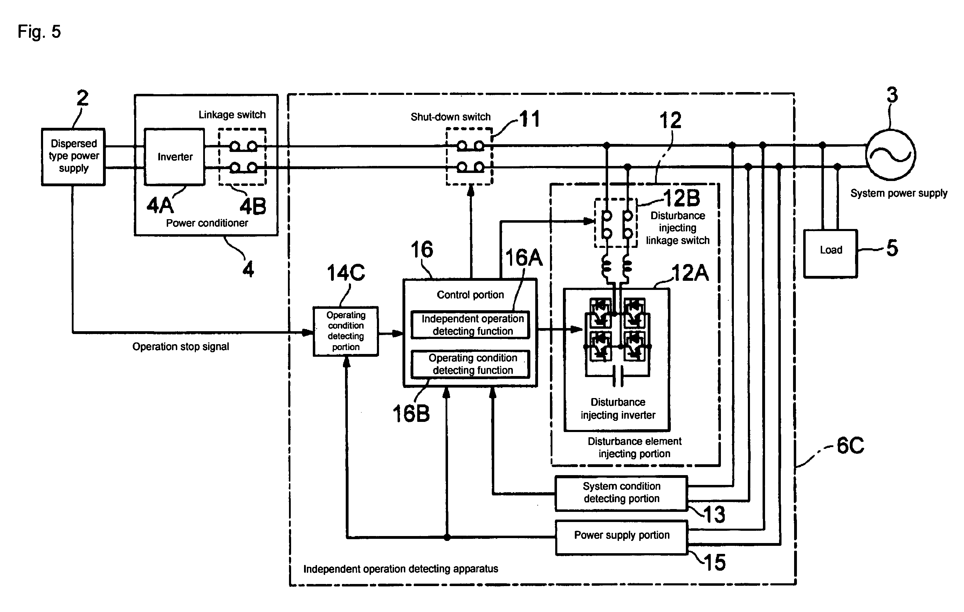

FIG. 5 is a block diagram showing the schematic structure of the interior of the system linkage system 1 which adopts an independent operation detecting apparatus according to a fourth embodiment. Like reference numerals are attached to the same system linkage system 1 shown in FIG. 1 and duplicated description of the structure and operation is not repeated.

An independent operation detecting apparatus 6C shown in FIG. 5 is different from the independent operation detecting apparatus 6 shown in FIG. 1 in that instead of the voltage detecting portion 14, an operating condition detecting portion 14C for detecting an operating condition signal indicating the operating condition from the dispersed type power supply 2 is provided, the operating condition detecting function 16B of the control portion 16 detects an operating condition signal from the dispersed type power supply 2 through the operating condition detecting portion 14C so as to judge whether or not the operating condition signal is an operation stop signal and if it is determined that the operating condition signal is an operation stop signal, it is determined that the operation of the dispersed type power supply 2 is stopped.

The operating condition detecting means mentioned in the scope of claim corresponds to the operating condition detecting portion 14C.

According to the fourth embodiment, when an operating condition signal is detected through the operating condition detecting portion 14C and it is determined that the operating condition signal is an operation stop signal, it is determined that the operation of the dispersed type power supply 2 is stopped and the disturbance element injecting portion 12 and the system condition detecting portion 13 are disabled. As a consequence, waste power consumption in the disturbance element injecting portion 12 and the system condition detecting portion 13 relating to the independent operation detection when the operation of the dispersed type power supply 2 is stopped can be reduced largely, thereby improving the system efficiency of the independent operation detecting apparatus 6C largely.

### (Fifth embodiment)

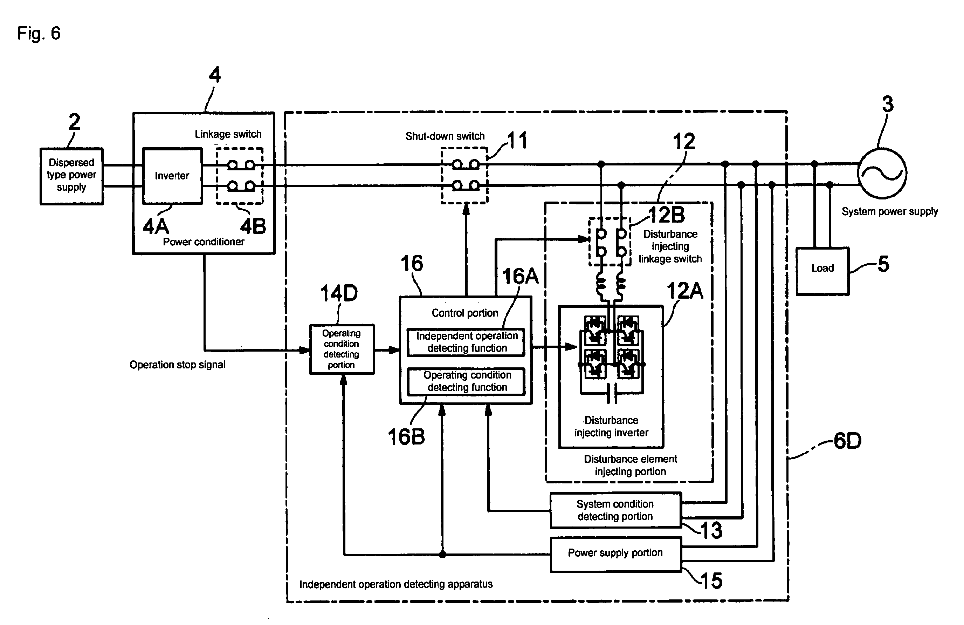

FIG. 6 is a block diagram showing the schematic structure of the interior of the system linkage system 1 which adopts an independent operation detecting apparatus 6 according to a fifth embodiment. Like reference numerals are attached to the same structure as the system linkage system 1 shown in FIG. 1 and duplicated description of the structure and operation is not repeated.

An independent operation detecting apparatus 6D shown in FIG. 6 is different from the independent operation detecting apparatus 6 shown in FIG. 1 in that instead of the voltage detecting portion 14, an operating condition detecting portion 14D for detecting an operating condition signal indicating an operating condition from the power conditioner 4 is provided, the operating condition detecting function 16B of the control portion 16 judges whether or not the operating condition signal is an operation stop signal by detecting the operating condition signal from the power conditioner 4 through the operating condition detecting portion 14D and if it is determined that the operating condition signal is an operation stop signal, it is determined that the operation of the dispersed type power supply 2 is stopped.

The operating condition detecting means mentioned in the scope of claim corresponds to the operating condition detecting portion 14D.

According to the fifth embodiment, when an operating condition signal of the power conditioner 4 is detected through the operating condition detecting portion 14D and it is determined that the operating condition signal is an operation stop signal, it is determined that the operation of the dispersed type power supply 2 is stopped and the disturbance element injecting portion 12 and the system condition detecting portion 13 are disabled. As a consequence, waste power consumption in the disturbance element injecting portion 12 and the system condition detecting portion 13 relating to the independent operation detection when the operation of the dispersed type power supply 2 is stopped can be reduced largely, thereby improving the system efficiency of the independent operation detecting apparatus 6D largely.

Although according to the first to fifth embodiments, the disturbance element injecting portion 12 and the system condition detecting portion 13 are disabled when it is determined that the operation of the dispersed type power supply 2 is stopped, the disturbance element generating activity of the disturbance injecting inverter 12A of the disturbance element injecting portion 12 is stopped or connection between the system power supply 3 and the disturbance injecting inverter 12A may be shut down by controlling the disturbance injecting linkage switch 12B of the disturbance element injecting portion 12.

In the first to fifth embodiments, the voltage detecting portion 14 shown in FIG. 1, the output current detecting portion 14A shown in FIG. 3, the operation schedule monitoring portion 14B shown in FIG. 4, the operating condition detecting portion 14C shown in FIG. 5 and the operating condition detecting portion 14D shown in FIG. 6 have been described in order to determine whether or not the dispersed type power supply 2 or the power condition 4 is down. If it is determined that the voltage between the dispersed type power supply 2 and the power conditioner 4 is less than a predetermined voltage threshold and at the same time it is determined that the output current of the power conditioner 4 is less than the predetermined current threshold by using both the voltage detecting portion 14 and the output current detecting portion 14A at the same time in order to determine whether or not the dispersed type power supply 2 or the power conditioner 4 is down, it may be determined that the dispersed type power supply 2 is down. As a consequence, whether or not the dispersed type power supply 2 is down can be determined using the output current of the power conditioner 4 and a voltage between the power conditioner 4 and the dispersed type power supply 2.

When it is determined that the voltage between the dispersed type power supply 2 and the power conditioner 4 is less than the predetermined voltage threshold and a present time is in operation stop time zone of the dispersed type power supply 2 using both the voltage detecting portion 14 and operation schedule monitoring portion 14B at the same time, it may be determined that the dispersed type power supply 2 is down, and consequently, whether or not the dispersed type power supply 2 is down can be determined securely depending on a voltage between the dispersed type power supply 2 and the power conditioner 4 and in the unit of operation schedule time of the dispersed type power supply 2.

Further, when it is determined that the voltage between the dispersed type power supply 2 and the power conditioner 4 is less than the predetermined voltage threshold and that an operating condition signal from the dispersed type power supply 2 is an operation stop signal using both the voltage detecting portion 14 and the operating condition detecting portion 14C at the same time, it may be determined that the dispersed type power supply 2 is down and whether or not the dispersed power supply 2 is down can be determined securely depending on a voltage between the dispersed type power supply 2 and the power conditioner 4 and according to an instruction from the dispersed type power supply 2.

Further, when it is determined that the output current of the power conditioner 4 is less than the predetermined current threshold and that present time is in an operation stop time zone using both the output current detecting portion 14A and operation schedule monitoring portion 14B at the same time, it may be determined that the dispersed type power supply 2 is down and consequently, whether or not the dispersed type power supply 2 is down can be determined securely using the output current of the power conditioner 4 and in the operation schedule time unit of the dispersed type power supply 2.

Further, when it is determined that the output current of the power conditioner 4 is less than the predetermined current threshold and that an operating condition signal from the dispersed type power supply 2 is an operation stop signal using both the output current detecting portion 14A and operating condition detecting portion 14C at the same time, it may be determined that the dispersed type power supply 2 is down and consequently, whether or not the dispersed type power supply 2 is down can be determined securely depending on output current of the power conditioner 4 and according to an instruction from the dispersed type power supply 2.

Further, when it is determined that the present time is in operation stop time zone and that the operating condition signal from the dispersed type power supply 2 is an operation stop signal using both the operation schedule monitoring portion 14B and operating condition detecting portion 14C at the same time, it may be determined that the dispersed type power supply 2 is down and consequently, whether or not the dispersed type power supply 2 is down can be determined securely in the operation schedule time unit of the dispersed type power supply 2 and according to an instruction form the dispersed type power supply 2.

Because this embodiment intends to improve the system efficiency of the entire independent operation detecting apparatus 6 by stopping the drives of the disturbance element injecting portion 12 and the system condition detecting portion 13 or stopping supply of electricity when it is determined that the dispersed type power supply 2 is down, needless to say, the embodiment for determining whether or not the dispersed type power supply 2 is down can be considered in various ways.

Although in this embodiment, a type in which the independent operation detecting apparatus 6 (6A, 6B, 6C, 6D) is connected to the outside face of the power conditioner 4 has been explained above, needless to say, this embodiment can be applied to an incorporation type in which the independent operation detecting apparatus 6 (6A, 6B, 6C, 6D) is incorporated in the power conditioner 4 and the same effect can be obtained.

In the independent operation detecting apparatus of the present invention, the control means enables the disturbance element injecting means and system condition detecting means when an operating condition of the dispersed type power supply is detected by the operating condition detecting means and disables the disturbance element injecting means and system condition detecting means when an operation stop of the dispersed type power supply is detected by the operating condition detecting means. As a consequence, when the dispersed type power supply is down, the system efficiency can be improved largely by stopping independent operation detecting functions such as disturbance element injecting activity of the independent element injecting means and system condition detecting activity of the system condition detecting means. As a result, the present invention can be applied effectively to such a dispersed type power supply as a solar power generator which is affected in its operation by sunshine time of the sun.

## Claims

1. An independent operation detecting apparatus (6) comprising: a disturbance element injecting means (12) for injecting a disturbance element in between a dispersed type power supply (2) and a system power supply (3); a system condition detecting means (13) for detecting a change in system due to disturbance element at a system linkage point (X) between the dispersed type power supply (2) and system power supply (3); and a control means (16) for detecting independent operation of the dispersed type power supply (2) based on the detection result of the system condition detecting means (13), **characterized by** further comprising:
an operating condition detecting means (14C, 14D) for detecting an operating condition of the dispersed type power supply (2), and **characterized in that**
the control means (16) enables the disturbance element injecting means (12) and system condition detecting means (13) when an operating condition of the dispersed type power supply (2) is detected by the operating condition detecting means (14C, 14D) and disables the disturbance element injecting means (12) and system condition detecting means (13) when an operation stop of the dispersed type power supply (2) is detected by the operating condition detecting means (14C, 14D).

2. The independent operation detecting apparatus (6) according to claim 1, further **characterized in that**
the control means (16) stops supply of electricity from the system power supply to the disturbance element injecting means (12) and the system condition detecting means (13) when the operation stop of the dispersed type power supply (2) is detected by the operating condition detecting means (14C, 14D).

3. The independent operation detecting apparatus (6) according to claim 1, further **characterized in that** the control means (16) controls the disturbance element injecting means (12) so as to stop injecting the disturbance element to the disturbance element injecting means (12) when the operation stop of the dispersed type power supply (2) is detected by the operating condition detecting means (14C, 14D).

4. The independent operation detecting apparatus (6) according to claim 1, further **characterized in that**
the control means (16) is able to set a normal mode for activating both independent operation detecting function (16A) activating the disturbance element injecting means (12) and the system condition detecting means (13) to detect an independent operation of the dispersed type power supply (2) and operating condition detecting function (16B) detecting an operating condition of the dispersed type power supply (2) by the operating condition detecting means (14C, 14D) or a sleep mode for activating only the operating condition detecting function (16B), and selectively sets the sleep mode if the operation stop of the dispersed type power supply (2) is detected by the operating condition detecting means (14C, 14D).

5. The independent operation detecting apparatus (6) according to claim 1, 2, 3 or 4, further **characterized in that**
the operating condition detecting means (14C, 14D) has an output current detecting means (14A) for detecting output current of a power conditioner (4) which converts DC power from the dispersed type power supply (2) to AC power, judges whether or not the output current detected by the output current detecting means (14A) is less than a predetermined current threshold, and detects the operation stop of the dispersed type power supply (2) if it is determined that the output current is less than the predetermined current threshold.

6. The independent operation detecting apparatus (6) according to claim 1, 2, 3 or 4, further **characterized in that**
the operating condition detecting means (14C, 14D) has a voltage detecting means (14) for detecting voltage between a power conditioner (4) which converts DC power from the dispersed type power supply (2) to AC power and the dispersed type power supply (2), judges whether or not the voltage detected by the voltage detecting means (14) is less than a predetermined voltage threshold, and detects the operation stop of the dispersed type power supply (2) if it is determined that the voltage is less than the predetermined voltage threshold.

7. The independent operation detecting apparatus (16) according to claim 1, 2, 3 or 4, further **characterized in that**
the operating condition detecting means (14C, 14D) judges whether or not an operating condition signal from the dispersed type power supply (2) is an operation stop signal and detects the operation stop of the dispersed type power supply (2) if it is determined that the operating condition signal is the operation stop signal.

8. The independent operation detecting apparatus (6) according to claim 1, 2, 3 or 4, further **characterized in that**
the operating condition detecting means (14C, 14D) sets an operation stop time zone of the dispersed type power supply (2), judges whether or not present time reaches the operation stop time zone, and detects the operation stop of the dispersed type power supply (2) if it is determined that the present time reaches the operation stop time zone.

9. The independent operation detecting apparatus (6) according to claim 1, 2, 3 or 4, further **characterized in that**
the operating condition detecting means (14C, 14D) comprises: an output current detecting means (14A) for detecting output current of a power conditioner (4) which converts DC power from the dispersed type power supply (2) to AC power; and a voltage detecting means (14) for detecting voltage between the dispersed type power supply (2) and the power conditioner (4), and detects the operation stop of the dispersed type power supply (2) if it is determined that the output current detected by the output current detecting means (14A) is less than a predetermined current threshold and that the voltage detected by the voltage detecting means (14) is less than a predetermined voltage threshold.

10. The independent operation detecting apparatus (6) according to claim 1, 2, 3 or 4, further **characterized in that**
the operating condition detecting means (14C, 14D) has an output current detecting means (14A) for detecting output current of a power conditioner (4) which converts DC power from the dispersed type power supply (2) to AC power, and detects the operation stop of the dispersed type power supply (2) if it is determined that the output current detected by the output current detecting means (14A) is less than a predetermined current threshold and that an operating condition signal from the dispersed type power supply (2) is an operation stop signal.

11. The independent operation detecting apparatus (6) according to claim 1, 2, 3 or 4, further **characterized in that**
the operating condition detecting means (14C, 14D) has an output current detecting means (14A) for detecting output current of a power conditioner (4) which converts DC power from the dispersed type power supply (2) to AC power, sets an operation stop time zone of the dispersed type power supply (2) and detects the operation stop of the dispersed type power supply (2) if it is determined that the output current detected by the output current detecting means (14A) is less than a predetermined current threshold and that the present time reaches the operation stop time zone of the dispersed type power supply (2).

12. The independent operation detecting apparatus (6) according to claim 1, 2, 3 or 4, further **characterized in that**
the operating condition detecting means (14C, 14D) has a voltage detecting means (14) for detecting voltage between a power conditioner (4) which converts DC power from the dispersed type power supply (2) to AC power and the dispersed type power supply (2) and detects the operation stop of the dispersed type power supply (2) if it is determined that the voltage detected by the voltage detecting means (14) is less than a predetermined voltage threshold and that an operating condition signal from the dispersed type power supply (2) is an operation stop signal.

13. The independent operation detecting apparatus (6) according to claim 1, 2, 3 or 4, further **characterized in that**
the operating condition detecting means (14C, 14D) has a voltage detecting means (14) for detecting voltage between a power conditioner (4) which converts DC power from the dispersed type power supply (2) to AC power and the dispersed type power supply (2), sets an operation stop time zone of the dispersed type power supply (2) and detects the operation stop of the dispersed type power supply (2) if it is determined that the voltage detected by the voltage detecting means (14) is less than a predetermined voltage threshold and that the present time reaches the operation stop time zone of the dispersed type power supply (2).

14. The independent operation detecting apparatus (6) according to claim 1, 2, 3 or 4, further **characterized in that**
the operating condition detecting means (14C, 14D) sets an operation stop time zone of the dispersed type power supply (2) and detects the operation stop of the dispersed type power supply (2) if an operating condition signal from the dispersed type power supply (2) is an operation stop signal and the present time reaches the operation stop time zone of the dispersed type power supply (2).

15. An independent operation detecting apparatus (6) comprising: a disturbance element injecting means (12) for injecting a disturbance element in between a dispersed type power supply (2) and a system power supply (3); a system condition detecting means (13) for detecting a change in system due to disturbance element at a system linkage point (X) between the dispersed type power supply (2) and system power supply (3); and a control means (16) for detecting independent operation of the dispersed type power supply (2) based on the detection result of the system condition detecting means (13), **characterized by** further comprising:
a power conditioner operating condition detecting means (14C, 14D) which is disposed between the dispersed type power supply (2) and the independent operation detecting apparatus (6) in order to detect an operating condition of a power conditioner (4) which converts DC power of the dispersed type power supply (2) to AC power, and **characterized in that**
the control means (16) enables the disturbance element injecting means (12) and the system condition detecting means (13) when an operating condition of the power conditioner (4) is detected by the power conditioner operating condition detecting means (14C, 14D) and disables the disturbance element injecting means (12) and the system condition detecting means (13) when an operation stop of the power conditioner (4) is detected by the power conditioner operating condition detecting means (14C, 14D).

16. A control method of an independent operation detecting apparatus (6) comprising: a disturbance element injecting means (12) for injecting a disturbance element in between a dispersed type power supply (2) and a system power supply (3); a system condition detecting means (13) for detecting a change in system due to disturbance element at a system linkage point (X) between the dispersed type power supply (2) and system power supply (2); a control means (16) for detecting independent operation of the dispersed type power supply (2) based on the detection result of the system condition detecting means (13), and an operating condition detecting means (14C, 14D) for detecting an operating condition of the dispersed type power supply (2),
**characterized in that**
detecting an operating condition of the dispersed type power supply (2) by the operating condition detecting means (14C, 14D);
enabling the disturbance element injecting means (12) and the system condition detecting means (13) by the control means (16);
detecting an operation stop of the dispersed type power supply (2) by the operating condition detecting means (14C, 14D) ; and
disabling the disturbance element injecting means (12) and the system condition detecting means (13) by the control means (16).
